Europäisches Patentamt

European Patent Office

Office européen des brevets

(11) Veröffentlichungsnummer: **0 468 183 A2**

# EUROPÄISCHE PATENTANMELDUNG

(21) Anmeldenummer: **91109589.1**

(22) Anmeldetag: **11.06.91**

(51) Int. Cl.5: **G01N 1/10, G21F 7/005**

(30) Priorität: **27.07.90 DE 4023840**

(43) Veröffentlichungstag der Anmeldung:
**29.01.92 Patentblatt 92/05**

(84) Benannte Vertragsstaaten:
**CH DE FR GB LI SE**

(71) Anmelder: **Deutsche Gesellschaft für Wiederaufarbeitung von Kernbrennstoffen mbH**
**Hamburger Allee 4 Postfach 1407**
**W-3000 Hannover 1(DE)**

(72) Erfinder: **Knoch, Werner, Dr.**
**Ahornkamp 8**
**W-3257 Springe(DE)**
Erfinder: **Zeh, Horst**
**Kolberger Str. 19b**
**W-7500 Karlsruhe 1(DE)**

(74) Vertreter: **König, Norbert, Dipl.-Phys. Dr. et al**
**Patentanwälte Leine & König**
**Burckhardtstrasse 1**
**W-3000 Hannover 1(DE)**

(54) Probenbehältnis für die Entnahme von Gasproben und/oder Flüssigproben, insbesondere aus dem Sicherheitsbehälter eines Kernkraftwerks.

(57) Ein Probenbehältnis für die Entnahme von Gasproben und/oder Flüssigproben, insbesondere aus dem Sicherheitsbehälter eines Kernkraftwerks, weist einen zylindrischen Körper auf. Das offene Ende des zylindrischen Körpers (4) ist von einem ersten Verschluß (8) verschlossen, über den das Behältnis mit einer Gasprobe oder Flüssigprobe befüllbar ist. Im Boden (6) des zylindrischen Körpers ist ein zweiter Verschluß (10) angeordnet, über den eine Gasprobe aus dem Probenbehältnis zur Untersuchung entnehmbar ist. Für die Gasprobennahme ist zwischen dem ersten Verschluß (8) und dem zweiten Verschluß (10) eine Filteranordnung (16) vorgesehen. Ein solches Probenbehältnis ist einfach im Aufbau, leicht befüllbar, und aus dem Probenbehältnis kann das Probenmedium zwecks Untersuchung ebenfalls leicht entnommen werden.

Fig. 1

EP 0 468 183 A2

Die Erfindung betrifft ein Probenbehältnis für die Entnahme von Gasproben und/oder Flüssigproben, insbesondere aus dem Sicherheitsbehälter eines Kernkraftwerkes.

Die Aufgabe der vorliegenden Erfindung besteht darin, ein Probenbehältnis für die Entnahme von Gasproben und Flüssigproben anzugeben, das relativ einfach im Aufbau, leicht befüllbar und aus der leicht das Probenmedium zwecks Untersuchung entnehmbar ist. Außerdem soll das Probenbehältnis den speziellen Anforderungen zur Probennahme innerhalb des Sicherheitsbehälters eines Kernkraftwerkes auch wahrend und nach einem Störfall im Reaktor genügen. Dabei sind folgende Kriterien zu berücksichtigen:

Explosionen und Druckwellen im Rahmen der vom Sicherheitsbehälter zu beherrschenden Stärke; hohes radioaktives Strahlungsfeld; Behälterinnendruck bis 6 bar; Behälteratmosphäre bestehend aus Wasserdampf, Wasserstoff und Edelgasen; Temperaturen bis 140° C; schwebende Feststoffpartikel im Flüssigkeitssumpf.

Diese Aufgabe wird durch die Ausbildung gemäß Anspruch 1 gelöst.

Vorteilhafte und zweckmäßige Weiterbildungen dieser Aufgabenlösung sind in den Unteransprüchen gekennzeichnet.

Die Erfindung soll nachfolgend anhand der beigefügten Zeichnung näher erläutert werden.

Es zeigt:

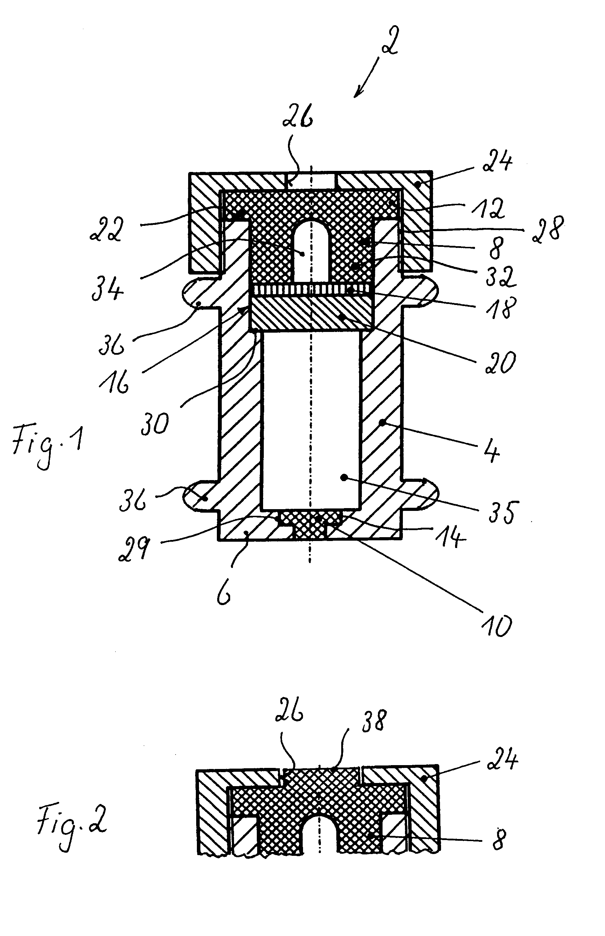

Fig. 1      schematisch ein Probenbehältnis für die Entnahme von Gasproben im Schnitt und

Fig. 2      eine andere Ausführungsform des Probenbehältnisses.

Die Zeichnung zeigt schematisch ein Probenbehältnis für die Entnahme von Gasproben mit einem zylindrischen Körper 4, dessen offenes Endes von einem ersten Verschluß 8 verschlossen ist und in dessen Boden 6 ein zweiter Verschluß 10 angeordnet ist. Über den ersten Verschluß erfolgt das Befüllen des Behältnisses mit einer Gasprobe. Über den zweiten Verschluß kann die Gasprobe aus dem Behältnis zur Untersuchung entnommen werden.

Beide Verschlüsse 8 und 10 sind als Pfropfen mit Randflansch 12 bzw. 14 ausgebildet. Sie bestehen vorzugsweise aus einem Gummimaterial, das mit einer Hohlnadel einer Befüll- oder Entnahmevorrichtung zum Befüllen mit oder zum Entnehmen einer Gasprobe durchstoßbar ist und nach Ziehen der Hohlnadel selbsttätig den durch die Nadel erzeugten Kanal schließt. Ein geeignetes Material ist beispielsweise Butylkautschuk.

Zwischen beiden Verschlüssen 8 und 10 befindet sich eine Filteranordnung 16, bestehend aus einem Aerosolfilter 18 und einem Jodfilter 20. Das Vorsehen der Filteranordnung hat den Vorteil, daß Aerosole und gasförmiges Jod getrennt an direkt meßbaren Trägern adsorbierbar sind, wodurch weitere Probenvorbereitungen entfallen können.

Der erste Verschluß 8 liegt mit seinem Randflansch 12 auf der Stirnseite 22 des zylindrischen Körpers 4 auf und wird mit Hilfe einer Schraubkappe 24, die auf das außenseitig mit einem Gewinde 28 versehene Ende des zylindrischen Körpers aufschraubbar ist, gegen die Stirnseite gepreßt. Die Schraubkappe 24 weist eine mittige Öffnung 26 auf. Die Schraubkappe besteht aus einem Metall oder einem anderen geeigneten Material, wobei die Außenseite der Schraubkappe gleichzeitig Dichtfläche für Abdichtmittel der Befüll- oder Entnahmevorrichtung ausgebildet ist.

Der erste Verschluß 8 weist für den Fall, daß die Schraubkappe 24 aus Metall besteht, eine in die Öffnung 26 der Schraubkappe 24 ragende Ausformung (Vorsprung 38) auf, deren Außenfläche als Dichtfläche für Abdichtmittel der Befüll- oder Entnahmevorrichtung ausgebildet ist, wie dies in der Fig. 2 gezeigt ist. Die Außenfläche der Ausformung 38 fluchtet vorzugsweise mit der Außenfläche der Schraubkappe 24.

Der zweite Verschluß 10 ist in eine komplementär zum Verschluß ausgebildete, gestufte Bohrung 29 des Bodens 6 eingepreßt.

Die Filteranordnung 16 liegt auf einer inneren Ringschulter 30 des zylindrischen Körpers 4 auf und wird vom ersten Pfropfen bzw. ersten Verschluß 8 gegen diese Schulter gedrückt.

Der in den zylindrischen Körper 4 ragende Teil 32 des ersten Verschlusses weist eine zur Filteranordnung 16 hin offene etwa mittige Ausnehmung 34 auf. Die Filteranordnung trennt somit die Ausnehmung 34 vom übrigen Probenraum 35 des Probenbehältnisses.

Der zylindrische Körper 4 des Probenbehältnisses 2 ist außenseitig mit zwei beabstandeten Ringflanschen 36 versehen.

Der Durchmesser der Ringflansche 36 ist größer als der Durchmesser der Schraubkappe 24.

Das Probenbehältnis ist vorzugsweise als Rohrpostläufer ausgebildet, wobei der Abstand der Ringflansche 36 so gewählt ist, daß eine Rohrpostkanalkrümmung mit einem Krümmungsradius von 500 mm durchfahren werden kann. Der Durchmesser der Ringflansche entspricht dem Innendurchmesser des Rohrpostkanals.

Das Material für das Probenbehältnis wird entsprechend den besonderen Bedingungen im Sicherheitsbehälter während und nach einem Störfall ausgewählt.

Um das probenbehältnis mit einer Gasprobe zu füllen, wird das Behältnis zuvor evakuiert. Zum Befüllen wird die oben schon erwähnte und nicht dargestellte Hohlnadel einer Befüllvorrichtung durch die Öffnung 26 und durch den Verschluß 8 hindurchgestoßen bis in die Ausnehmung 34 hinein. Infolge des Unterdruckes strömt dann das Gas in diese Ausnehmung 34 und von dort über die Filteranordnung in den der Ausnehmung 34 gegenüberliegenden Raum 35 des Probenbehältnisses. Nach dem Befüllen des Probenbehältnisses wird die Hohlnadel wieder gezogen, und der Verschluß 8 verschließt sich, wie oben erläutert, selbsttätig.

Um die Gasprobe zu untersuchen, kann diese über den zweiten Verschluß 10 beispielsweise mit Hilfe einer Injektionsspritze entnommen werden, deren Hohlnadel durch den Verschluß 10 hindurch in den Gasraum gestoßen wird. Nach Entnahme der Gasprobe und Ziehen der Injektionsnadel verschließt sich auch dieser zweite Verschluß selbsttätig.

Bei Probenbehältnissen, die zum Nehmen von Gasproben vorgesehen sind, kann der Probenraum 35 mit einem geeigneten Adsorptionsmittel, z. B. Aktivkohle, gefüllt sein; Bei einer solchen Ausbildung wird auf das Jodfilter 20 verzichtet.

Das Probenbehältnis kann gleichermaßen für die Nahme von Flüssigkeitsproben verwendet werden, nur daß in diesem Falle die Filteranordnung 16 wegfällt.

**Patentansprüche**

1. Probenbehältnis für die Entnahme von Gasproben und/oder Flüssigproben, insbesondere aus dem Sicherheitsbehälter eines Kernkraftwerkes mit einem zylindrischen Körper, **dadurch gekennzeichnet**, daß das offene Ende des zylindrischen Körpers (4) von einem ersten Verschluß (8) verschlossen ist, über den das Behältnis mit einer Gasprobe oder Flüssigprobe befüllbar ist,

   daß im Boden (6) des zylindrischen Körpers (4) ein zweiter Verschluß (10) angeordnet ist, über den eine Gasprobe aus dem Probenbehältnis zur Untersuchung entnehmbar ist,

   und daß für die Gasprobenahme zwischen dem ersten Verschluß (8) und dem zweiten Verschluß (10) eine Filteranordnung (16) angeordnet ist.

2. Probenbehältnis nach Anspruch 1, **dadurch gekennzeichnet**, daß beide Verschlüsse (8, 10) als Pfropfen mit Randflansch (12, 14) ausgebildet sind.

3. Probenbehältnis nach Anspruch 1 oder 2, **dadurch gekennzeichnet**, daß der erste Verschluß (8) mit seinem Randflansch (12) auf der Stirnseite (22) des zylindrischen Körpers (4) aufliegt und mit Hilfe einer eine mittige Öffnung (26) aufweisenden Schraubkappe (24), die auf das außenseitig mit einem Gewinde (28) versehene Ende des zylindrischen Körpers aufschraubbar ist, gegen die Stirnseite (22) gepreßt ist.

4. Probenbehältnis nach Anspruch 1 oder 2, **dadurch gekennzeichnet**, daß der zweite Verschluß (10) in einer komplementär dazu ausgebildeten gestuften Bohrung (29) des Bodens (6) eingepreßt ist.

5. Probenbehältnis nach Anspruch 1, **dadurch gekennzeichnet**, daß die Filteranordnung (16) auf einer inneren umlaufenden Ringschulter (30) des zylindrischen Körpers aufliegt und vom ersten Pfropfen bzw. ersten Verschluß (8) gegen diese Schulter gedrückt wird.

6. Probenbehältnis nach einem der vorhergehenden Ansprüche, **dadurch gekennzeichnet**, daß der in den zylindrischen Körper (4) ragende Teil (32) des ersten Verschlusses eine zur Filteranordnung (16) hin offene, etwa mittige Ausnehmung (34) aufweist, die durch die Filteranordnung von einem Probenraum (35) getrennt ist.

7. Probenbehältnis nach einem der vorhergehenden Ansprüche, **dadurch gekennzeichnet**, daß beide Verschlüsse (8, 10) aus einem mit einer Hohlnadel einer Befüll- oder Entnahmevorrichtung zum Befüllen mit oder zum Entnehmen einer Gasprobe durchstoßbaren und selbsttätig nach Ziehen der Hohlnadel schließenden Gummimaterial bestehen.

8. Probenbehältnis nach einem der vorhergehenden Ansprüche, **dadurch gekennzeichnet**, daß der zylindrische Körper (4) außenseitig zwei beabstandete Ringflansche (36) aufweist.

9. Probenbehältnis nach Anspruch 1 oder 5, **dadurch gekennzeichnet**, daß die Filteranordnung (16) aus einem Aerosolfilter (18) und einem Jodfilter (20) besteht.

10. Probenbehältnis nach Anspruch 8, **dadurch gekennzeichnet**, daß der Durchmesser der Ringflansche (36) größer ist als der Durchmesser der Schraubkappe (24).

11. Probenbehältnis nach einem der vorhergehenden Ansprüche, **dadurch gekennzeichnet**, daß es als Rohrpostläufer ausgebildet ist.

12. Probenbehältnis nach Anspruch 11, **dadurch gekennzeichnet**, daß der Abstand der Ringflansche (36) so gewählt ist, daß eine Rohrpostkanalkrümmung mit einem Krümmungsradius von 500 mm durchfahrbar ist.

13. Probenbehältnis nach einem der vorhergehenden Ansprüche, **dadurch gekennzeichnet**, daß der Probenraum (35) des Probenbehältnisses zum Nehmen einer Gasprobe unter Wegfall des Jodfilters mit einem Adsorptionsmittel (z. B. Aktivkohle) gefüllt ist.

14. Probenbehältnis nach einem der vorhergehenden Ansprüche, **dadurch gekennzeichnet**, daß der erste Verschluß (8) eine in die Öffnung (26) der Schraubkappe (24) ragende Ausformung (Vorsprung) (38) aufweist, deren Außenfläche als Dichtfläche für Abdichtmittel einer Befüllvorrichtung ausgebildet ist.

EP 0 468 183 A2

Fig.1

Fig.2

5